# EUROPEAN PATENT APPLICATION

(11) **EP 4 113 549 A1**
(43) Date of publication of application: **04.01.2023**
(21) Application number: 21182024.6
(22) Date of filing: 28.06.2021
(51) Int. Cl.: H01F 17/06, H01F 27/02, H01F 17/04, H01F 27/26

(54) **A MAGNETIC CORE DEVICE AND A POWER CONVERTER**

(71) Applicant: Valeo eAutomotive France SAS, 95800 Cergy (FR)
(72) Inventor: POUILLY, Aurélien, 95800 Cergy (FR); KUNTZE, Friedhelm, 91056 Erlangen (DE); LOPES, Christophe, 95800 Cergy (FR); Rasek, Guido, 91056 Erlangen (DE)
(74) Representative: Valeo Powertrain Systems

(57) **Abstract**

The invention concerns a magnetic core device (1) to be used in a power converter (100), comprising at least one fixation leg (7), and a body (51) comprising a magnetic core (3). The at least one fixation leg (7) extends from the body (51), and is configured to firmly fixate the magnetic core device (1) to a target component (110) such as a housing (110) of the power converter (100). The at least one fixation leg (7) and the body (51) are integrally formed as one-piece.

## Description

### FIELD OF THE INVENTION

The present invention concerns a magnetic core device and a power converter.

### BACKGROUND OF THE INVENTION

Power converters of an electric or a hybrid electric vehicle, are designed to convert an input voltage into an output voltage to be fed to the electric drive or other electric equipment of the vehicle.

As it is known, an electric or a hybrid electric vehicle comprises an electric drive comprised of an electric motor and an inverter which converts a direct current (DC) voltage into an alternative current (AC) voltage so as to drive the electric motor. In addition to the inverter, the electric or hybrid electric vehicle comprises other power converters such as an on-board charger connected to an AC electrical network and charging thus electricity into a battery of the vehicle, or a DC/DC converter.

A power converter comprises one or several magnetic core devices which are housed in a housing of the power converter and are fixed to said housing. The magnetic core devices can be utilized to prevent or limit the unwanted effects such as electromagnetic interference (EMI) of elements of the power converter.

In general, several fixation mechanisms can be used. For example, a magnetic core device is attached to an inner surface of the housing with glue, by snapping or by clipping. However, when the power converter experiences a vibration, an uncontrolled impact and/or an unexpectedly high temperature, the above-mentioned fixation mechanisms cannot ensure that the magnetic core device is still properly fixed to its own predetermined position, especially when the magnetic core device is heavy. This would result in a decrease in the performance or even a malfunction of the magnetic core device and/or of the whole power converter. In addition, the use of glue increases the manufacturing cost of the power converter.

Therefore, the main objective of the present invention is to provide a fixation mechanism which allows to improve the robustness of the magnetic core device and the power converter while reducing the manufacturing cost.

### SUMMARY OF THE INVENTION

The present invention concerns a magnetic core device to be used in a power converter, comprising at least one fixation leg, and a body comprising a magnetic core. The at least one fixation leg extends from the body, and is configured to firmly fixate the magnetic core device to a target component such as a housing of the power converter. The at least one fixation leg and the body are integrally formed as one-piece, in order to enhance the robustness of the magnetic core device and to improve the fixation effect.

Therefore, the present invention allows to considerably improve the fixation effect, especially in the uncontrolled or unexpected circumstances such as vibrations, impacts and/or high temperatures. The invention allows thus to improve the robustness of the magnetic core device and the power converter. In addition, no more glue is required for assembly, which simplifies the assembly process and reduces the manufacturing cost.

According to an embodiment, the at least one fixation leg extends from at least one of sidewalls of the body and/or from the bottom of the body of the magnetic core device.

According to an embodiment, the magnetic core device comprising further at least one passage comprising openings located at two opposite sidewalls of the body, the at least one passage being configured to allow at least one electrical conductor to pass through. The at least one electrical conductor can be plural electrical plate conductors of busbar(s) of the power converter.

Preferably, the at least one fixation leg and the opening(s) are not located at a same sidewall of the body.

According to an embodiment, the at least one fixation leg comprises a main fixation hole corresponding to a target fixation hole located at a fixation point of the target component, so that a major fixation mechanism can be provided by driving a screw or a rivet into the main fixation hole and the target fixation hole, so as to firmly fixate the at least one fixation leg to the target point of the target component. The body of the magnetic core device can thus be fixated to a predetermined position on the target component (e.g. the housing of the power converter).

According to an embodiment, the at least one fixation leg comprises an insert comprising a central hole corresponding to the fixation hole. The insert, being embedded in the at least one fixation leg, is utilized as a compression limiter made of a metal material or of plastic.

Moreover, in addition to a surface of the target component in contact with the bottom of the magnetic core device, the fixation point allows to create an extra area to share the pressure caused by the mass of the magnetic core device, which prevents the magnetic core device from being detached from the target component.

According to an embodiment, the magnetic core device comprises at least one auxiliary fastener being located on the bottom wall of the housing and being adapted to engage with at least one interlocking fastener arranged on the target component. Such an auxiliary fixation mechanism allows to attach the magnetic core device to the target component, for example by clipping or snapping.

According to an embodiment, the at least one auxiliary fastener is made integrally with the body as one-piece.

According to a preferable embodiment, the magnetic core device comprises plural fixation legs extending from two opposite sidewalls of the body. The fixation legs are integrally formed with the two opposite sidewalls, which makes the attachment of the magnetic core device to the target component more stable.

According to an embodiment, the magnetic core device comprises further a positioning module configured to position the magnetic core device to the predetermined position on the target component (e.g. the housing of the power converter). The positioning module preferably comprises at least one of following means: hole(s), oblong(s) and/or pin(s).

According to an embodiment, the body of the magnetic core device comprises a holder configured to at least partially accommodate the magnetic core, wherein the at least one fixation leg extends from the holder and is integrally formed with the holder as one-piece.

According to an embodiment, the sidewalls of the body are sidewalls of the holder which define a core chamber configured to accommodate the magnetic core.

According to an embodiment, the holder comprises a holder cap configured to close a chamber opening of the core chamber. Preferably, the holder cap is different from the at least one sidewall where the at least one fixation leg is located, so that the existence of the fixation leg(s) would not complicate an assembly step of placing the magnetic core into the core chamber.

According to an embodiment, the holder is in the shape of a shallow-plate with a raised edge, and is configured to hold the magnetic core.

According to a preferred embodiment, the holder is made of an insulating material.

According to an embodiment, the magnetic core is made of one or any combination of a nanocrystalline material, a ferrite material and an iron powder material.

According to an embodiment, the magnetic core comprises two E-shaped portions or two U-shaped portions.

The present invention also concerns a power converter comprising a housing and the above-mentioned magnetic core device accommodated in the housing. The magnetic core device comprises at least one fixation leg, and a body comprising a magnetic core. The least one fixation leg, being configured to firmly fixate the magnetic core device to the housing, extends from the body and is integrally formed with the body as one-piece.

The power converter according to the invention may be an inverter which converts a DC voltage into an AC voltage so as to drive an electric motor of an electric drive of an electric vehicle or of a hybrid electric vehicle. The AC voltage may be a multiphase AC voltage, in particular a three-phase AC voltage. Alternatively, the power converter may be an on-board charger or a DC/DC converter of the electric vehicle or the hybrid electric vehicle.

A further aspect of the invention is an electric drive comprising an electric motor and the inverter as described above configured to convert a DC voltage into an AC voltage in order to drive the electric motor.

Another aspect of the invention is an electric vehicle or a hybrid electric vehicle, comprising the electric drive configured to drive the electric vehicle or a hybrid electric vehicle.

Although embodiments have been described with reference to a number of illustrative embodiments thereof, it should be understood that other modifications and embodiments can be derived by those skilled in the art that will fall within the scope of the principles of this disclosure.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
- Figure 1 illustrates a power converter according to an embodiment of the present invention;
- Figures 2 and 3 illustrate, according to different perspectives, a magnetic core device of the power converter, the magnetic core device comprising extension legs according to an embodiment of the present invention;
- Figure 4 illustrates a cross-section of the magnetic core device according to an embodiment of the present invention;
- Figure 5 illustrates a cross-section of a holder that the magnetic core device may have according to an embodiment of the present invention.

### DETAILED DESCRIPTION

Several embodiments of the present invention will be detailed hereafter with reference to the drawings. It will be apparent to those skilled in the art from this present disclosure that the following description of these embodiments of the present invention are provided for illustration only and not for the purpose of limiting the invention as defined by the appended claims and their equivalents.

The invention relates to an electric vehicle or a hybrid electric vehicle comprising wheels and an electric drive configured to drive, at least indirectly, at least one of the wheels of the vehicle. The electric drive comprises an electric motor and an inverter as a power converter, the inverter being configured to drive the electric motor by means of an AC voltage generated by the inverter. The power converter can be, alternatively, an on-board charger or a DC/DC converter of the electric vehicle or hybrid electric vehicle.

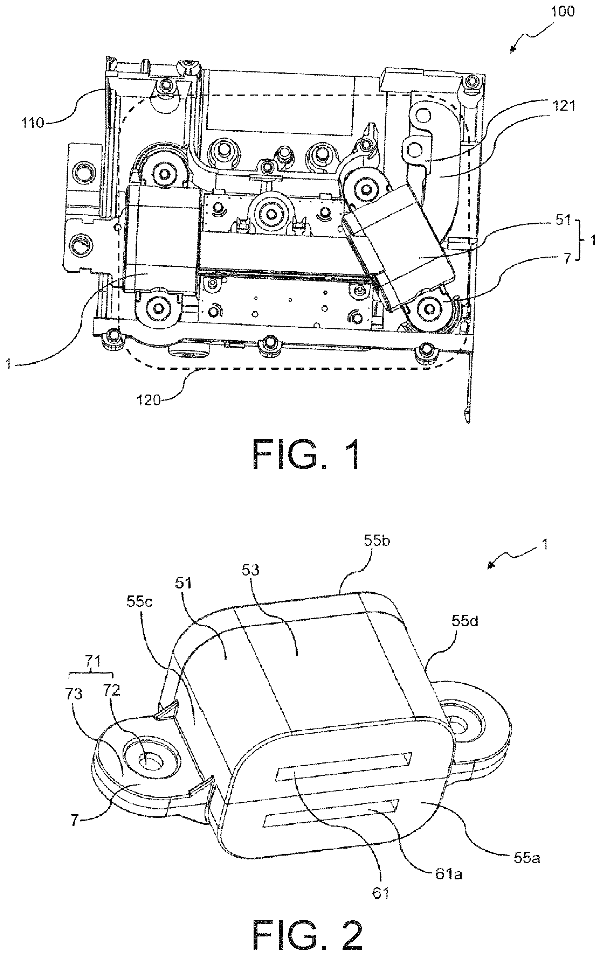

Figure 1 illustrates a power converter 100 according to an embodiment of the present invention. The power converter 100 can be, as mentioned above, an inverter configured to convert a DC voltage into an AC voltage in order to drive the electric motor. The AC voltage may be a multiphase AC voltage, in particular a three-phase AC voltage.

The power converter 100 comprises a housing 110, one or plural magnetic core devices 1, and an electronic board mounted on a bottom plate of the housing 110. The housing 110 is preferably made of a conductive material (e.g. such as AISi12(fe)) and may be manufactured by a die-casting process. The electronic board is preferably a printed circuit board (PCB). The at least one busbar 120, being a DC busbar, comprises a set of electrical conductors 121 (i.e. positive and negative terminals). The electrical conductors 121 are preferably in a plate shape. In the present embodiment the power converter 100 comprises two identical magnetic core devices 1. For ease of illustration, one magnetic core device 1 is described in detail in the following text. The invention is nevertheless not limited to the number of the magnetic core devices 1.

According to the present embodiment, the housing 110 comprises a top cover, the bottom plate, sidewalls, and a main chamber defined by the bottom plate and the sidewalls. The main chamber is used for accommodating the electronic board and the magnetic core device(s) 1 of the power converter 100. Other elements of the power converter 100, such as an insulating board, a heat sink and some electronic components, are also be accommodated in the main chamber.

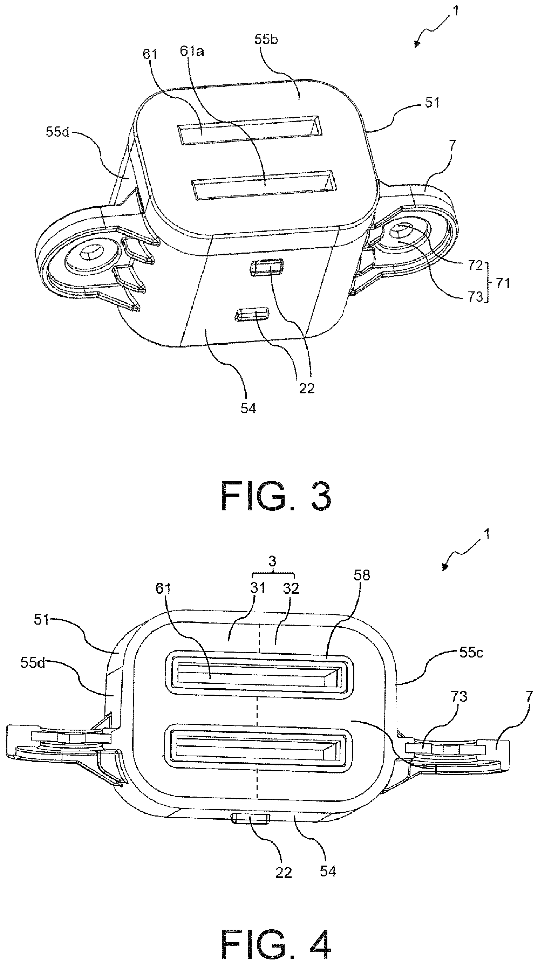

Figures 2 and 3 illustrate, according to different perspectives, the magnetic core device 1 of the power converter 100 according to an embodiment of the present invention. Figure 4 illustrates a cross-section of the magnetic core device 1. The magnetic core device 1 comprises at least one fixation leg 7, and a body 51 comprising a magnetic core 3. The magnetic core 3, acting as an inductance to filter either common mode or differential mode currents or a combination of both, is utilized to prevent or limit the unwanted effects such as EMI or even physical damage of elements of the power converter 100.

The at least one fixation leg 7, extending from the body 51, is configured to firmly fixate the magnetic core device 1 to a target component such as the housing 110 of the power converter 100. The at least one fixation leg 7 and the body 51 are integrally formed as one-piece in order to enhance the robustness of the magnetic core device 1 and to improve the fixation effect.

According to an embodiment, the at least one fixation leg 7 extends from at least one of the sidewalls 55a to 55d (e.g. "sidewalls 55c and 55d" in Figures 2 to 4) of the body 51. The at least one fixation leg 7 and the corresponding sidewall (55c or 55d) are integrally formed as one-piece. According to an alternative embodiment (not illustrated in figures), the at least one fixation leg 7 extends from the bottom (e.g. "54" in Figures 2 to 4) of the body 51. The at least one fixation leg 7 and the bottom of the body 51 are integrally formed as one-piece. The at least one fixation leg 7 will be described in detail in the following paragraphs.

The magnetic core device 1 comprises at least one passage 61 configured to allow at least one electrical conductor (e.g. the electrical plate conductors 121 of the busbar(s) 120 of the power converter 100) to pass through. As illustrated in Figures 2 to 4, each of the passages 61 is a passage with two openings 61a respectively located at one of two opposite sidewalls 55a, 55b of the body 51, wherein the two openings 61a are opposite to each other. The electrical plate conductors 121 of the busbar(s) 120 can thus pass through the magnetic core device 1, via the openings 61a and the passages 61 of the magnetic core device 1. According to an embodiment, at least one of the passages 61 allows plural electrical plate conductors 121 of plural busbars 120 to pass through.

According to an embodiment, the openings 61a and the at least one fixation leg 7 are not located at the same sidewall(s) of the body 51. In addition, the passage 61 presents preferably a shape complementary to the shape of the extrinsic component 121. The invention is not limited to the number and the shape of the passage(s) 61 of the magnetic core device 1.

The magnetic core device 1 may further comprise at least one insulation layer 58 made of an insulating material, such as plastic. The at least one insulation layer 58 is configured to separate the magnetic core 3 and the at least one electrical conductor (121) which passes through the magnetic core 3 of the body 51.

The magnetic core 3 is either a monoblock or is comprised of plural portions respectively made of a magnetic material which is, for example, one or any combination of a nanocrystalline material, a ferrite material, and an iron powder material. Alternatively, the magnetic core 3 can be made of magnetic materials different from the above-mentioned ones. According to a embodiment, the magnetic core 3 comprises two E-shaped portions 31, 32 and two passages 61, as illustrated in Figure 4. A middle portion of the magnetic core 3 between the passages 61 can be a ferrite bar while the rest of the magnetic core 3 is made of a nanocrystalline material. Alternatively, the magnetic core 3 comprises two U-shaped portions and one passage 61. The invention is not limited to the types of the magnetic material or the shape of the portions of the magnetic core 3.

According to a preferable embodiment, the magnetic core device 1 comprises plural fixation legs 7 extending from two opposite sidewalls 55c and 55d of the body 51. The fixation legs 7 are integrally formed with the sidewalls 55c and 55d which are opposite to each other, which makes the attachment of the magnetic core device 1 to the target component (e.g. the housing 110) more stable. The fixation legs 7 are preferably located at a lower portion of the magnetic core device 1, as illustrated in Figure 4. In other words, the fixation legs 7 are preferably closer to the bottom 54 than to the top 53 of the body 51.

For ease of illustration, one fixation leg 7 is described in detail in the following text. The invention is nevertheless not limited to the number of the fixation legs 7. The fixation leg 7 is configured to be fixed to a fixation point on the target component (e.g. the housing 110). The body 51 can thus be fixated to a predetermined position on the target component (e.g. the housing 110). The fixation leg 7 comprises a main fixation element 71 which corresponds to a first fixation element (not illustrated in figures) arranged at the fixation point of the target component 110. According to the present embodiment, the main fixation element 71 comprises a main fixation hole 72 and preferably an insert 73 comprising a central hole corresponding to the fixation hole 72. The insert 73 is utilized as a compression limiter made of a metal material or of plastic, and is embedded in the fixation leg 7 by an overmolding process. Alternatively, the insert 73 is inserted into the fixation leg 7 after the molding process (e.g. knurled compression limiters).

The first fixation element comprises, for example, a target fixation hole at the fixation point of the target component 110. A major fixation mechanism can be provided by driving a screw or a rivet into the main fixation hole 72 and the corresponding target fixation hole, so as to firmly fixate the fixation leg 7 to the target point of the target component 110. Moreover, in addition to a surface of the target component 110 in contact with the bottom of the magnetic core device 1, the fixation point allows to create an extra area to share the pressure caused by the mass of the magnetic core device 1, which prevents the magnetic core device 1 from being detached from the target component 110.

According to an embodiment, the magnetic core device 1 comprises further a positioning module (not illustrated in figures) configured to position the body 51 to the predetermined position on the target component (e.g. the housing 110). The positioning module preferably comprises at least one of following means: hole(s), oblong(s) and pin(s).

In addition, as illustrated in Figures 3 and 4, the magnetic core device 1 preferably comprises at least one auxiliary fastener 22. The at least one auxiliary fastener 22 is located on the bottom 54 and is adapted to engage with at least one interlocking fastener (not illustrated in figures) arranged on the target component 110. The at least one auxiliary fastener 22 together with the at least one interlocking fastener, provides an auxiliary fixation mechanism allowing to attach the magnetic core device 1 to the target component 110, for example by clipping or snapping. The at least one auxiliary fastener 22 is preferably made integrally with the body 51 as one-piece.

According to an embodiment, the body 51 (illustrated in Figures 2 to 4) of the magnetic core device 1 is the magnetic core 3. In this case, the magnetic core 3 is preferably made of an iron powder material. The sidewalls 55a to 55d of the body 51 are sidewalls of the magnetic core 3. The openings 61a and passage(s) 61 of the magnetic core device 1 are openings and passages formed on/in the magnetic core 3. The at least one fixation leg 7 extends from at least one of the sidewalls of the magnetic core 3 and/or from the bottom of the magnetic core 3. The at least one fixation leg 7 and the magnetic core 3 are integrally formed as one-piece, and are thus made of a same magnetic material (e.g. the iron powder material).

Alternatively, the body 51 comprises, in addition to the magnetic core 3, a holder 8 configured to at least partially accommodate the magnetic core 3. The holder 8 is preferably made of an insulating material, such as plastic. The at least one fixation leg 7 extends from the holder 8 and is integrally formed with the holder 8 as one-piece. In this case, the at least one fixation leg 7 and the holder 8 are made of a same insulating material.

According to an embodiment (not illustrated in figures), the holder 8, being in the shape of a shallow-plate with a raised edge, comprises a support plate and the raised edge. The support plate together with the raised edge is configured to hold (i.e. to partially accommodate) the magnetic core 3. The magnetic core device 1 comprises further a core fixation means configured so that the magnetic core 3 is partially housed in the holder 8 but is still firmly attached to the support plate of the holder 8. In this case, the holder 8 does not have sidewalls. The sidewalls 55a to 55d of the body 51 are sidewalls of the magnetic core 3. The openings 61a and passage(s) 61 of the magnetic core device 1 are openings and passages formed on/in the magnetic core 3. The one or plural fixation legs 7 extend from the support plate, or from a joint of the support plate and the raised edge of the holder 8. The fixation leg(s) 7 and the support plate of the holder 8 are integrally formed as one-piece, and are thus made of a same insulating material.

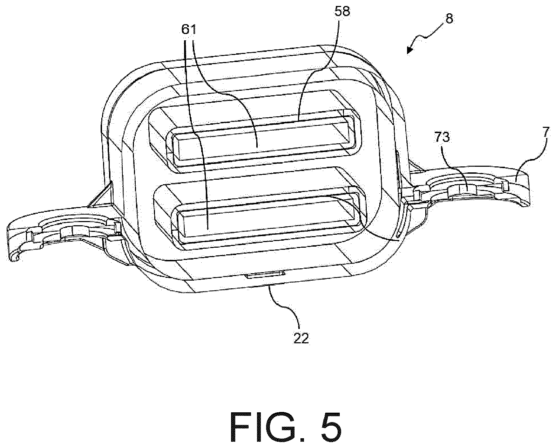

According to another embodiment, the holder 8 of the body 51 (illustrated in Figures 2 to 4) comprises a core chamber configured to entirely accommodate the magnetic core 3. Figure 5 illustrates a cross-section of the holder 8 according to an embodiment of the present invention. The inner volume of the core chamber is substantially equal to that of the magnetic core 3. The sidewalls 55a to 55d, the top 53 and the bottom 54 of the body 51 are sidewalls, a top wall and a sidewall of the holder 8. The openings 61a and passage(s) 61 of the magnetic core device 1 are respectively formed on the sidewalls and inside the holder 8, and respectively correspond to openings and passages formed in the magnetic core 3 housed in the core chamber of the holder 8. Moreover, the at least one insulation layer 58 is preferably made integrally with the holder 8 as one-piece. Alternatively, the at least one insulation layer 58 is a separate element inserted into the holder 8.

The at least one fixation leg 7 extends from at least one of the sidewalls of the holder 8 and/or from the bottom of the holder 8. For example, as illustrated in Figure 5, the fixation legs 7 extend from the two opposite sidewalls of the holder 8, and are preferably located at a lower portion of the holder 8. In other words, the fixation legs 7 are preferably closer to the bottom than to the top of the holder 8. The one or plural fixation legs 7 and the sidewall(s) and/or the bottom of the holder where the one or plural fixation legs 7 are located, are integrally formed as one-piece and are thus made of a same insulating material.

According to an embodiment, the core chamber of the holder 8 comprises a chamber opening via which the magnetic core 3 is placed into the core chamber during a manufacturing process of the magnetic core device 1. For example, the E-shaped portions 31, 32 are placed via the chamber opening into the core chamber. The holder 8 comprises a holder cap configured to close the chamber opening so as to seal the core chamber. The holder cap is preferably one of the sidewalls (e.g. sidewall 55b) or the top wall of the holder 8. Moreover, the opening(s) 61a may also be located at the holder cap 55b.

According to an embodiment, except the holder cap, the rest of the holder 8 is integrally formed as one-piece. Moreover, the holder cap 55b is different from the sidewalls 55c, 55d where the one or plural fixation legs 7 are located. Therefore, the existence of the fixation leg(s) 7 would not complicate an assembly step of placing the magnetic core 3 into the core chamber of the holder 8.

According to an alternative embodiment, during another manufacturing process different from the above-mentioned one, the magnetic core 3 is formed together with the holder 8 by using a suitable mold in a (over)molding process. The holder 8 and the fixation leg(s) 7 extending from the holder 8, are integrally formed as one-piece without neither a chamber opening as mentioned above, nor a separate piece such as the holder cap.

The invention allows to fixate the magnetic core device to the housing of the power converter without a fixation on the whole busbar. Compared to the above-mentioned conventional fixation mechanisms such as an attachment with glue or merely by clipping/snapping, the invention uses the fixation legs integrally formed with the magnetic core device, which allows to considerably improve the fixation effect, especially in the uncontrolled or unexpected circumstances such as vibrations, impacts and/or high temperatures. The invention allows thus to improve the robustness of the magnetic core device and the power converter. In addition, no more glue is required for assembly, which simplifies the assembly process and reduces the manufacturing cost.

## Claims

1. A magnetic core device (1), comprising:
- a body (51) comprising a magnetic core (3); and
- at least one fixation leg (7), which extends from the body (51) and is configured to firmly fixate the magnetic core device (1) to a target component (110), the at least one fixation leg (7) and the body (51) being integrally formed as one-piece.

2. The magnetic core device (1) according to claim 1, wherein:
- the at least one fixation leg (7) extends from at least one of sidewalls (55a to 55d) of the body (51) and/or from the bottom of the body (51), and/or
- the magnetic core device (1) comprising further at least one passage (61) comprising openings (61a) located at two opposite sidewalls (55a to 55d) of the body (51), the at least one passage (61) being configured to allow at least one electrical conductor (121) to pass through.

3. The magnetic core device (1) according to claim 2, wherein the at least one fixation leg (7) and the openings (61a) are not located at a same sidewall of the body (51).

4. The magnetic core device (1) according to any one of the preceding claims, wherein the at least one fixation leg (7) comprises a main fixation hole (72) corresponding to a target fixation hole located at a fixation point of the target component (110), so that by driving a screw or a rivet into the main fixation hole (72) and the target fixation hole, the at least one fixation leg (7) is fixed to the target point of the target component (110).

5. The magnetic core device (1) according to the preceding claim, wherein the at least one fixation leg (7) comprises an insert (73) comprising a central hole corresponding to the fixation hole (72); the insert (73) being embedded in the at least one fixation leg (7) and utilized as a compression limiter made of a metal material or of plastic.

6. The magnetic core device (1) according to any one of the preceding claims, comprising at least one auxiliary fastener (22) being located on the bottom (54) of the body (51) and being adapted to engage, by clipping or snapping, with at least one interlocking fastener arranged on the target component (110).

7. The magnetic core device (1) according to the preceding claim, wherein the at least one auxiliary fastener (22) is made integrally with the body (51) as one-piece.

8. The magnetic core device (1) according to any one of the preceding claims, comprising plural fixation legs (7) extending from two opposite sidewalls (55c, 55d) of the body (51), the fixation legs (7) being integrally formed with the two opposite sidewalls (55c, 55d).

9. The magnetic core device (1) according to any one of the preceding claims, wherein the body (51) comprises a holder (8) configured to at least partially accommodate the magnetic core (3), wherein the at least one fixation leg (7) extends from the holder (8) and is integrally formed with the holder (8) as one-piece.

10. The magnetic core device (1) according to the preceding claim in combination with claim 2, wherein the sidewalls (55a to 55d) of the body (51) are sidewalls of the holder (8) which define a core chamber configured to accommodate the magnetic core (3).

11. The magnetic core device (1) according to the preceding claim, wherein the holder (8) comprises a holder cap (55b) configured to close a chamber opening of the core chamber.

12. The magnetic core device (1) according to the preceding claim, wherein the holder cap (55b) is different from the at least one sidewall (55c, 55d) where the at least one fixation leg (7) is located.

13. The magnetic core device (1) according to claim 9, wherein the holder (8) is in the shape of a shallow-plate with a raised edge, and is configured to hold the magnetic core (3).

14. The magnetic core device (1) according to any one of the preceding claims 9 to 13, wherein:
- the holder (8) is made of an insulating material; and/or
- the magnetic core (3) is made of one or any combination of a nanocrystalline material, a ferrite material, and an iron powder material, the magnetic core comprising two E-shaped portions (31, 32) or two U-shaped portions.

15. A power converter (100), comprising:
- a housing (110), configured to accommodate the magnetic core device (1); and
- a magnetic core device (1) according to any one of claims 1 to 14, comprising a body (51), and at least one fixation leg (7) configured to firmly fixate the magnetic core device (1) to the housing (110), wherein the at least one fixation leg (7) extends from the body (51) and is integrally formed with the body (51) as one-piece.
